# EUROPÄISCHE PATENTSCHRIFT

(11) **EP 2 143 550 B1**
(45) Veröffentlichungstag und Bekanntmachung des Hinweises auf die Patenterteilung: **26.01.2011**
(21) Anmeldenummer: 09006372.8
(22) Anmeldetag: 12.05.2009
(51) Int. Cl.: B29C 51/22, B29C 51/32, B29C 51/38, B29C 51/44

(54) **Vorrichtung zum Herstellen von Hohlkörpern aus thermoplastisch verformbaren Kunststoff-Folien**
Device for manufacturing hollow bodies from thermoplastic reformable plastic films
Dispositif de fabrication de corps creux en feuilles de plastique déformables thermoplastiques

(30) Priorität: 11.07.2008 DE 102008032806
(43) Veröffentlichungstag der Anmeldung: 13.01.2010
(73) Patentinhaber: Gabler Thermoform GmbH & Co. KG, 23568 Lübeck (DE)
(72) Erfinder: Wölk, Frank-Michael, 23858 Reinfeld (DE)
(74) Vertreter: Grosse, Wolf-Dietrich Rüdiger

(56) Entgegenhaltungen:
- DE-A1- 19 710 475
- US-A- 6 135 756

## Beschreibung

Die Erfindung betrifft eine Vorrichtung zum Herstellen von Hohlkörpern aus thermoplastisch verformbaren Kunststoff-Folien, umfassend einen intermittierenden Folientransport, ein oberhalb der Folienbahn angeordnetes Oberwerkzeug und einen unterhalb der Folienbahn in einem Schwenkrahmen höhenverschiebbar geführten, mit dem Schwenkrahmen ausschwenkbaren Formtisch zur Aufnahme eines Unterwerkzeugs, insbesondere kombiniertes Form- und Stanzwerkzeug, wobei der Formtisch über einen kurvengesteuerte Kniehebel ausweisenden Schubkurbelantrieb an einen Antrieb angeschlossen ist.

Eine Vorrichtung dieser Art ist aus der EP 1 314 536 B 1 bekannt. Ein dort an einer um einen Drehpunkt schwenkbaren Schwenkbrücke verschiebbar geführter Unter- bzw. Formtisch wird über Kniehebellaschen an der Schwenkbrücke gehalten. Die Kniehebellaschen werden über eine erste Schubstange von einer seitlich angeordneten Antriebseinrichtung beaufschlagt, die über eine weitere, zweite Schubstange auch die Schwenkbewegung der Schwenkbrücke mit dem Formtisch bewirkt. Die über die beiden Schubstangen eingeleiteten Bewegungen werden von Kurvenscheiben gesteuert, die an den Schubstangen angelenkten Hebeln zugeordnet sind. Die Horizontal- und die Schwenkbewegung laufen bis zu einer bestimmten Winkellage der Kniehebellaschen überschneidend ab.

Durch die DE 197 10 475 A 1 ist eine Thermoformmaschine bekannt geworden, bei der der Form- bzw. Untertisch über ein in einem fundamentseitigen Lagerbock drehbar gelagertes Hebelpaar abgestützt wird. Der untere Hebel liegt mit einer an dem unterhalb des Lagerbock-Anlenkpunktes vorgesehenen Rolle an eine angetriebene, sich mit konstanter Drehzahl drehenden Kurvenscheibe an. In bzw. auf dem Formtisch ist ein das Werkzeug aufweisender, separater Schwenktisch angeordnet. Dieser ist mittels eines Schwenkbolzens, der den Drehpunkt des Schwenktisches darstellt, mit dem Formtisch verbunden. Der Schwenktisch greift mit mindestens einer Rolle in mindestens ein Nut einer Kulisse ein, worüber bei der von der Kurvenscheibe über das Hebelpaar gesteuerten Absenkbewegung des Formtisches der separate Schwenktisch in eine zur Abgabe bzw. Entnahme der Fertigartikel verschwenkte Position verstellt wird. Während der Formtisch sich linear nach unten bewegt, folgt die Rolle des Schwenktisches der Kurve der Führungsnut, wobei der Schwenktisch zunächst eine lineare Absenkbewegung und im gekrümmten Abschnitt der Führungsnut anschließend eine Schwenkbewegung ausführt. Das mit dem Schwenktisch nicht mit schwenkbare Hebelpaar ist über den Unter- bzw. Formtisch nur indirekt mit der Rolle verbunden.

Bei den bekannten Vorrichtungen haben sich die Kurvenscheiben als nachteilig gezeigt, da eine Änderung der Bewegungsabläufe einen aufwändigen Austausch der zudem teuren Kurvenscheiben erforderlich macht. Außerdem sind sie wegen der zahlreichen Hebel-Anlenkpunkte störungsanfällig und machen eine große Bauhöhe notwendig, insbesondere bei einer Hebelabstützung des Formtisches von unten, wobei dann auch noch hinzukommt, dass die Hebel und deren Gelenklager die großen Kräfte beim Schließen der Tische zur Umformung und anschließendem Ausstanzen der Fertigartikel aufnehmen müssen.

Der Erfindung liegt daher die Aufgabe zugrunde, eine gattungsgemäße Vorrichtung ohne die genannten Nachteile zu schaffen, die insbesondere einen variablen Betrieb sowie eine ergonomische Bauweise einer Thermoformmaschine ermöglicht.

Diese Aufgabe wird erfindungsgemäß dadurch gelöst, dass eine Pleuelstange des Schubkurbelantriebs an einer mit dem Drehpunkt des Schwenkrahmens identischen Schwenkwelle angreift, auf der ein unterer Kniehebel befestigt ist, der außerdem gelenkig mit einem oberen, an seinem von dem unteren Kniehebel entfernten, freien Ende am Formtisch angreifenden Kniehebel verbunden ist, dem auf beiden Seiten eines am Formtisch vorgesehenen Achsbolzens jeweils mindestens eine Laufrolle zugeordnet ist, die in ortsfeste, vom Schwenkrahmen und vom Formtisch unabhängige, die lineare Hubbewegung und die Schwenkbewegung des Schwenkrahmens samt Formtisch steuernden Kulissen eingreifen. Indem erfindungsgemäß der untere Kniehebel am Ort des Geschehens zur Schwenkung des gesamten, mit dem Werkzeug einheitlichen Formtisches gelagert ist, nämlich auf der den Drehpunkt des Schwenkrahmens definierenden Schwenkwelle, und somit sowohl der obere Kniehebel als auch die Pleuelstange ihre Lagerung im unteren Kniehebel haben, lässt sich auch beim Einsatz eines aus zwei Hebeln bestehenden Kniehebels eine niedrig bauende Maschine mit ergonomischer, angenehmer Arbeitshöhe erreichen. Dies wird dadurch weiter begünstigt, dass kein einen schwenkenden Tisch tragender, vertikal bewegbarer Untertisch erforderlich ist.

Für die Hub- und Schwenkbewegung sind keine gesonderten Kurvenscheiben und mehreren Hebelanordnungen erforderlich vielmehr, wird über die in die ortsfesten Kulissen eingreifenden Laufrollen dasselbe Kniehebelpaar sowohl für die eine als auch für die andere Bewegungsrichtung wirksam, wobei lediglich ein Antrieb erforderlich ist, vorzugsweise ein Servomotor. Dessen Drehzahl kann während eines Schwenkhubes in einfacher Weise verändert werden, so dass ein gewünschter Bewegungsablauf der Kippbewegung einschließlich eines sanften Anfahrens der Endlagen erreichbar ist. Da die Hub- und Schwenkbewegung zudem mechanisch synchronisiert sind, besteht keine Kollisionsgefahr, d. h. es kann zu keinen Überschneidungen der Bewegungsabläufe kommen.

Die kompakte, niedrige Bauweise der Thermoformmaschine, bei der der Angriffspunkt der Pleuelstange an dem unteren Kniehebel beabstandet von dem Gelenk der beiden Kniehebel vorgesehen ist, wobei der untere Kniehebel vorteilhaft einstückig in einer V-Form bzw. zweiarmig für die beiden individuellen Anlenkpunkte ausgebildet ist, ermöglicht einen Betrieb mit einem sehr kleinen Schwenkwinkel. Denn schon bei einem Schwenkwinkel von lediglich etwa 30 ° nimmt der über den Schwenkrahmen gemeinsam mit dem Formwerkzeug verschwenkte Formtisch eine für das Entstapeln der Fertigartikel in einer zugänglichen Arbeitshöhe liegende Position ein. Das bietet einen besseren Halt beim Stapeln von Bechern und insbesondere bei ansonsten nur mit viel Aufwand in der Horizontalen abzustapelnden Deckeln.

Eine bevorzugte Ausführung der Erfindung sieht vor, dass der Schubkurbelantrieb zwei parallel voneinander beabstandete Pleuelstangen aufweist, die mit ihnen jeweils zugeordneten Kniehebeln mit dem kulissengesteuerten Formtisch verbunden sind. Durch den auf die Schwenkwelle wirkenden Doppel-Schubkurbelantrieb werden die Aufbringung der hohen Schließkräfte und die Hubbewegungen des in dem Schwenkrahmen geführten Formtisches begünstigt.

Es wird ausgestaltungsgemäß vorgeschlagen, dass gleichzeitig der obere Kniehebel mit seinem freien Ende auf dem oder den die Laufrollen tragenden Achsbolzen gelagert ist. Dies kann somit ein quer durch den Formtisch hindurch geführter einstückiger Achsbolzen sein oder es können vorteilhaft zwei Achsbolzen vorgesehen werden. Alternativ ist es möglich, für die Laufrollen und die Anlenkpunkte der oberen Kniehebel separate Lagerstummel- bzw. zapfen am Formtisch auszubilden.

Ein Vorschlag der Erfindung sieht vor, dass der Formtisch beidseitig angeordnete Linearführungen aufweist, deren bewegliche Teile am Formtisch und deren Führungsschienen am Schwenkrahmen vorgesehen sind. Mit den Linearführungen, beispielsweise Rollenumlaufführungen, lassen sich Kippmomente um die horizontale Querachse auffangen.

Nach einer vorteilhaften Ausführung der Erfindung sind die den oder - beim Doppel-Kurbelantrieb - die beiden oberen Kniehebel am Formtisch lagernden Achsbolzen exzentrisch ausgebildet, wobei auf dem einen Exzenterabschnitt eine auf der unteren Laufbahn der Kulisse und einem anderen Exzenterabschnitt eine auf der oberen Laufbahn der Kulisse abrollende Laufrolle angeordnet ist.

Nach einer vorteilhaften alternativen Bauweise sind die den oder beiden oberen Kniehebel am Formtisch lagernden Achsbolzen zylindrisch und tragen koaxial nebeneinander zwei Laufrollen, die auf zueinander höhenversetzten, benachbarten Laufbahnen, die nach einer Ausgestaltung der Erfindung in jeweils einer separaten Kulissenscheibe ausgebildet sein können, der Kulisse abrollen.

In beiden Fällen lässt sich erreichen, dass die Drehrichtung der Laufrollen auf dem Weg durch die Kulisse eindeutig bestimmt ist und sich durch eine undefinierte Anlage der Laufrollen einmal oben und einmal unten in der Kulisse nicht umkehren kann, was zu erheblich schnellerem Verschleiß führen würde.

Weitere Einzelheiten und Merkmale der Erfindung ergeben sich aus den Ansprüchen und der nachfolgenden Beschreibung von in den Zeichnungen dargestellten Ausführungsbeispielen der Erfindung. Es zeigen:
- Fig. 1: in einer perspektivischen Gesamtansicht die Formstation, einer Thermoformmaschine, d. h. ohne deren als solche hinlänglich be- kannten peripheren Anlagenteile wie Auf- und Abwickelrollen für die Kunststoff-Folie, Folien-Transporteinrichtung und Heizeinrichtung;
- Fig. 2: die Formstation nach Fig. 1 in der Vorderansicht von der Entnahme- seite her gesehen mit dort zum Abstapeln der Fertigprodukte ange- ordneter Fang- bzw. Stapelplatte;
- Fig. 3: die Formstation nach Fig. 1 in der Seitenansicht;
- Fig. 4: die Formstation nach Fig. 1 in der Draufsicht;
- Fig. 5: die Formstation nach Fig. 1 in der Seitenansicht mit geöffnetem Werkzeug, d. h. abgesenktem Formtisch;
- Fig. 6: eine Seitenansicht wie zuvor in Fig. 5, demgegenüber in einer Zwischenposition beim Verschwenken zum Entstapeln der Fertigarti- kel;
- Fig. 7: eine Ansicht wie zuvor in Fig. 6, demgegenüber ausgeschwenkt in die Endposition zum Entstapeln der Fertigartikel;
- Fig. 8: die Formstation nach Fig. 1 in einer perspektivischen Ansicht von unten gesehen;
- Fig. 9: als Einzelheit der Formstation in einer perspektivischen Ansicht die Linearführung des Formtisches im Schwenkrahmen;
- Fig. 10: als Einzelheit der Formstation eine ortsfeste Kulisse mit darin geführ- ter Laufrolle des Formtisches;

- Fig. 11: die Kulisse nach Fig. 10 in der Draufsicht;
- Fig. 12: als Einzelheit der Fig. 10 einen Schnitt entlang der Linie XII-XII;
- Fig. 13: perspektivische Darstellung der Kulisse mit den darin geführten Lauf- rollen nach den Fig. 10 bis 12;
- Fig. 14: in der Vorderansicht eine andere Ausführung einer ortsfesten Kulisse mit darin geführten Laufrollen;
- Fig. 15: die Kulisse nach Fig. 14 in der Draufsicht;
- Fig. 16: einen Schnitt entlang der Linie XVI-XVI von Fig. 14; und
- Fig. 17: perspektivische Darstellungen der Kulisse mit den darin geführten Laufrollen nach Fig. 14 bis 16.

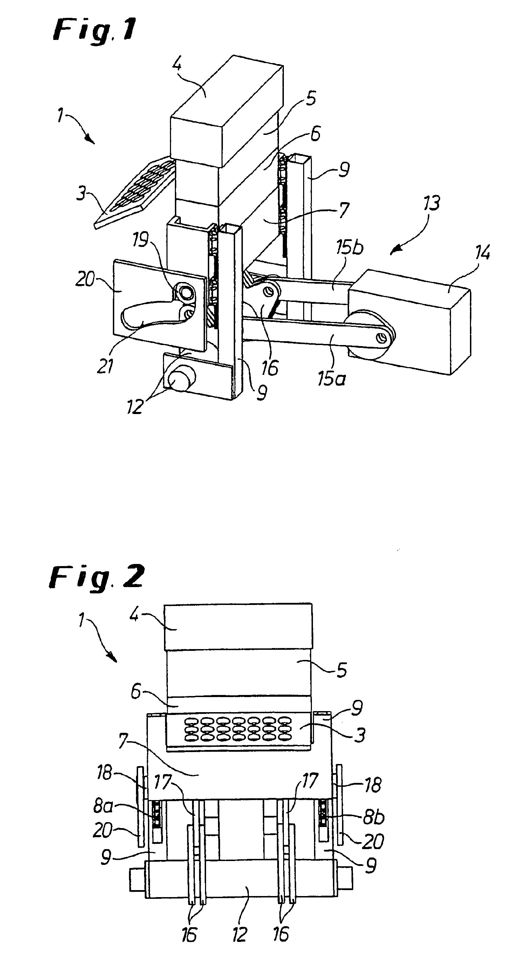

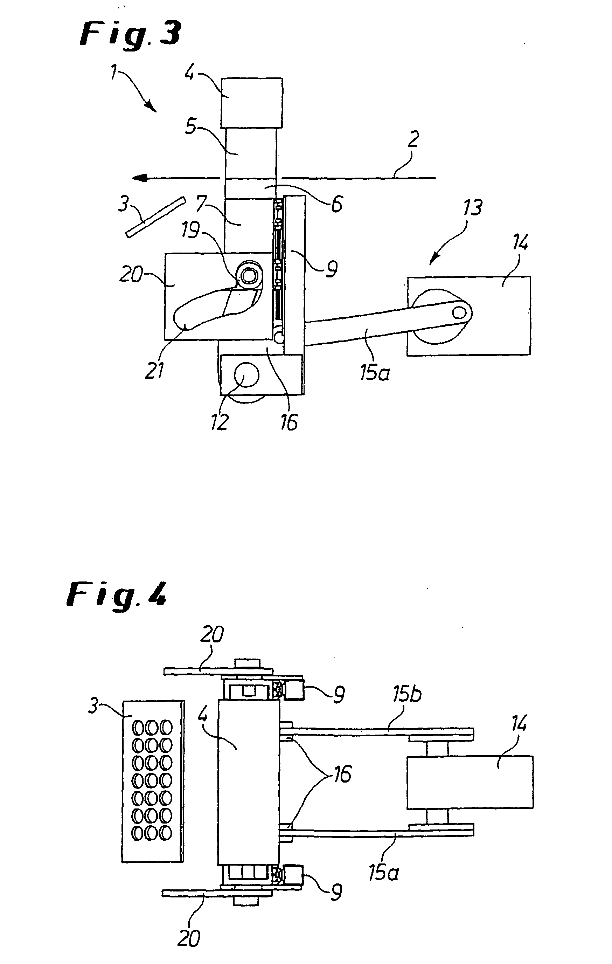

In den Fig. 1 bis 8 ist von einer Thermoformanlage im wesentlichen lediglich deren Formstation 1 mit in Durchlaufrichtung einer intermittierend horizontal zugeführten Folienbahn 2 (vgl. Fig. 3) in Form einer Fang- oder Stapelplatte 3 vorgesehener Stapeleinrichtung, in der die aus der Folienbahn 2 hergestellten Fertigartikel abgestapelt werden. Die Formstation 1 weist ein an einem starren Querhaupt 4 befestigtes Oberwerkzeug 5, ggf. ausgebildet als kombiniertes Form-Stanzwerkzeug, und einen ein Unterwerkzeug 6 tragenden, sowohl höhenbeweglichen als auch verschwenkbaren Formtisch 7 auf.

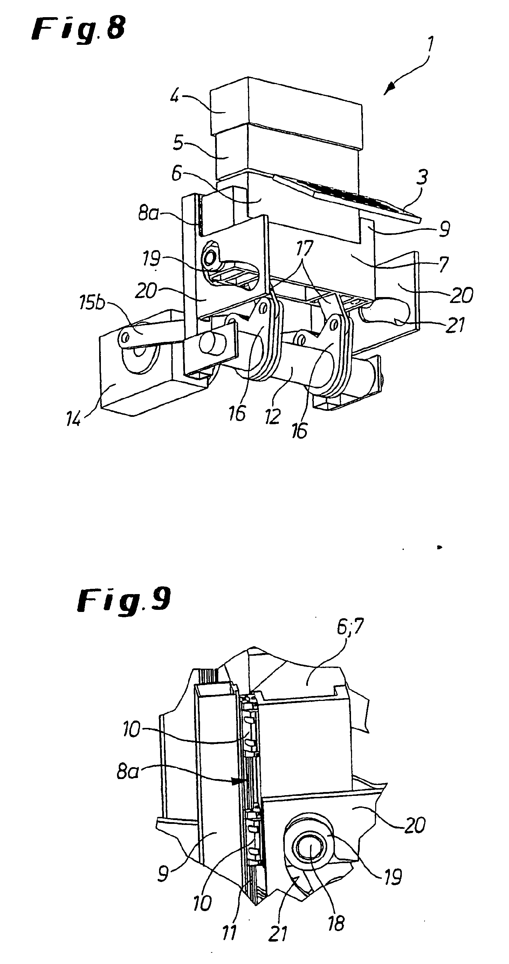

Der Formtisch 7 mit dem Unterwerkzeug 6 wird beidseitig in Linearführungen 8 a, 8 b eines Schwenkrahmens 9 geführt. Die beweglichen Teile 10, z. B. Führungsschuhe, der Linearführungen 8 a, 8 b sind am Formtisch 7 bzw. Unterwerkzeug 6 und deren Führungsschienen 11 sind am Schwenkrahmen 9 angeordnet (vgl. Fig. 9). Zum Verschwenken des Schwenkrahmens 9 zusammen mit dem darin geführten Formtisch 7 einschließlich Unterwerkzeug 6 ist bodenseitig eine gemeinsame Schwenkwelle 12 vorgesehen, die gleichzeitig den Drehpunkt der gesamten Einheit definiert. An die Schwenkwelle 12 greift ein Schubkurbelantrieb 13 an, der aus einem Servomotor 14 bzw. Servo-Getriebemotor und zwei von diesem beaufschlagten, voneinander parallel beabstandeten Pleuelstangen 15 a, 15 b besteht.

Auf der Schwenkwelle 12 sind zwei V-förmige bzw. zweiarmige, untere Kniehebel 16 befestigt, an die sowohl die Pleuelstangen 15 a, 15 b als auch im Abstand von diesen obere Kniehebel 17 angelenkt sind (vgl. Fig. 8). Die oberen Kniehebel 17 des Kniehebelpaares 16, 17 sind weiterhin an in dem Formtisch 7 angeordneten Achsbolzen angelenkt, auf denen außen, diametral zu den Kniehebelanlenkungen gleichzeitig auch Laufrollen 19 gelagert sind. Diese greifen in ortsfeste, in von den Bewegungen der schwenkenden Teile unabhängigen Kulissenscheiben 20 ausgebildeten Kulissenführungen 21 ein. Die stationären, nicht verschwenkenden Kulissenscheiben 20 steuern über ihre Kulissenführungen 21 aufgrund ihrer Formgebung mit einem vertikal nach oben gerichtetem Abschnitt und einem sich daran in Durchlaufrichtung der Folienbahn 2 (vgl. Fig. 3) im wesentlichen horizontal mit leichter Neigung nach unten anschließendem Abschnitt einerseits die Hubbewegung des Formtisches 7 sowie andererseits die Schwenkbewegung der Einheit aus Schwenkrahmen 9 mit dem darin geführten, das Oberwerkzeug 6 tragenden Formtisch 7.

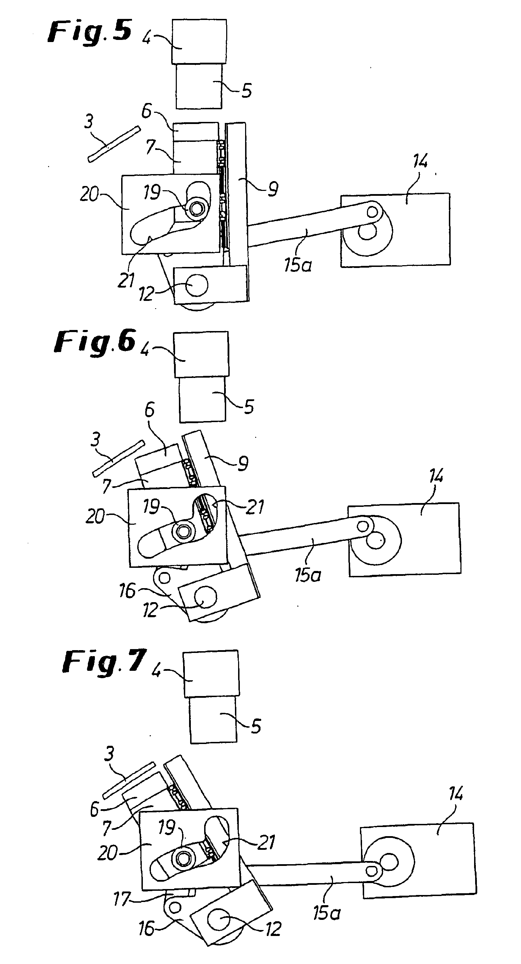

Die Fig. 1 bis 4 zeigen die Schließlage, d. h. der Formtisch 7 hat das Unterwerkzeug 6 in die obere Position gegen das Unterwerkzeug 5 bewegt. In dieser geschlossenen Endposition werden aus der Folienbahn 2 die Fertigartikel ausgeformt und ausgestanzt. Anschließend wird - wie in den Fig. 5 bis 7 dargestellt - der Formtisch 7 in dem Führungsrahmen 9 abgesenkt und dann in die Endstellung (vgl. Fig. 7) zum Ausstapeln der ausgestanzten, im Unterwerkzeug 6 liegenden Fertigartikel geschwenkt, wobei über ein geeignetes Auswerfersystem die Fertigartikel aus dem Unterwerkzeug 6 in die Stapeleinrichtung 3 überführt werden. In den beiden Endstellungen hält der Servomotor 14 an, damit zum einen Zeit für die Umformung der Kunststoffartikel gegeben ist und damit zum anderen der Auswerfer Zeit hat, die Kunststoffartikel aus dem Unterwerkzeug in die Stapeleinrichtung zu überführen.

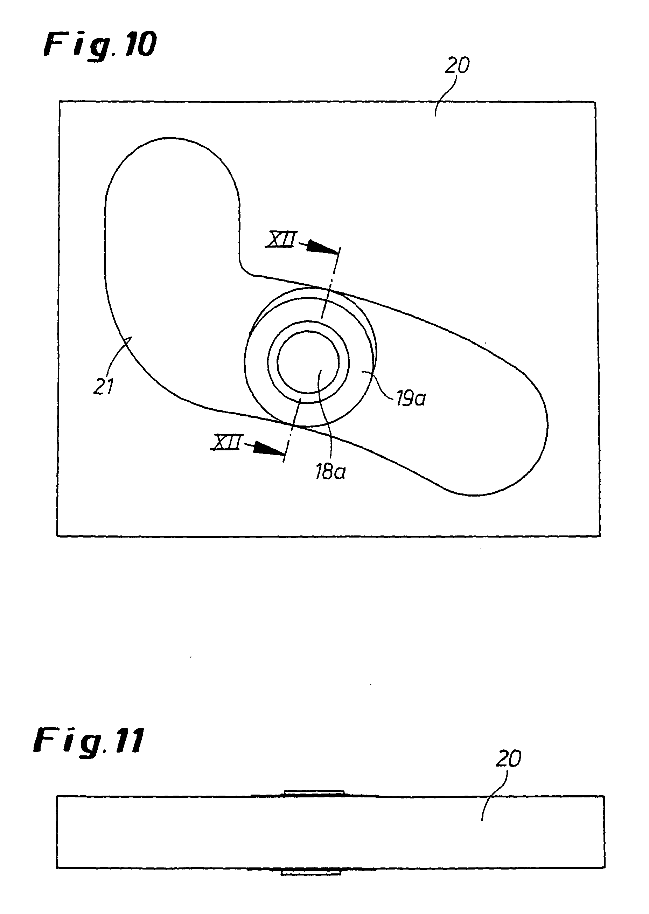

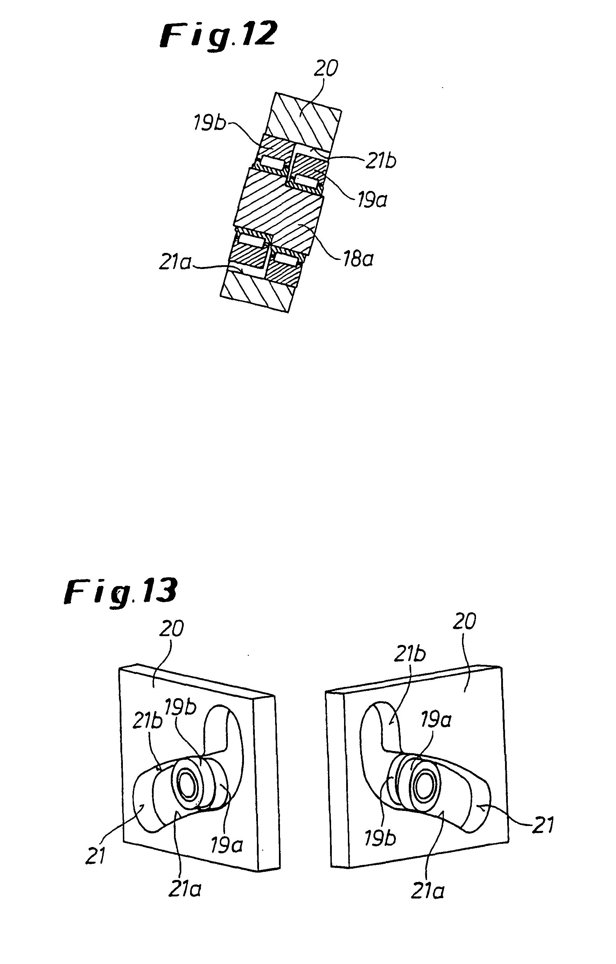

In den Fig. 10 bis 13 ist eine Anordnung von zwei jeweils paarweise in den Kulissenführungen 21 der Kulissenscheiben 20 geführten Laufrollen 19 a, 19 b dargestellt, bei der der die Laufrollen 19 a, 19 b lagernde Abschnitt der Achsbolzen als Exzenterbolzenendabschnitt 18 a ausgebildet ist. Die Laufrollen 19 a, 19 b sind somit zueinander höhenversetzt, so dass die eine, im Ausführungsbeispiel äußere Laufrolle 19 a gezielt nur auf der unteren Laufbahn 21 a und die andere Laufrolle 19 b gezielt nur auf der oberen Laufbahn 21 b abrollt. Ein Kippen der Laufrollen 19 a, 19 b in der Kulissenführung 21 einmal nach oben und das andere Mal nach unten wird somit ausgeschlossen.

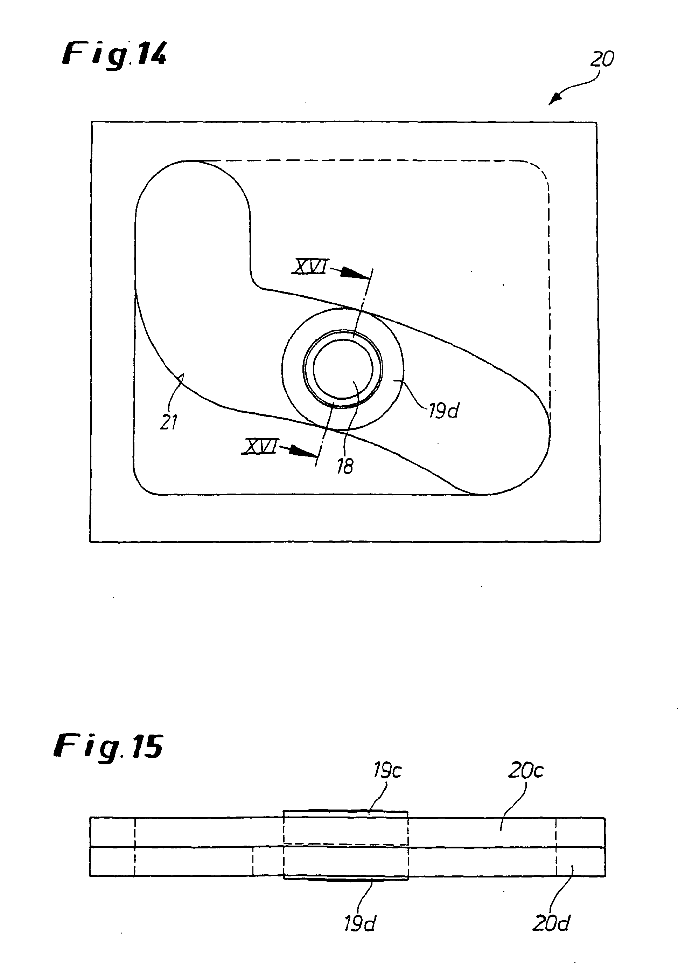

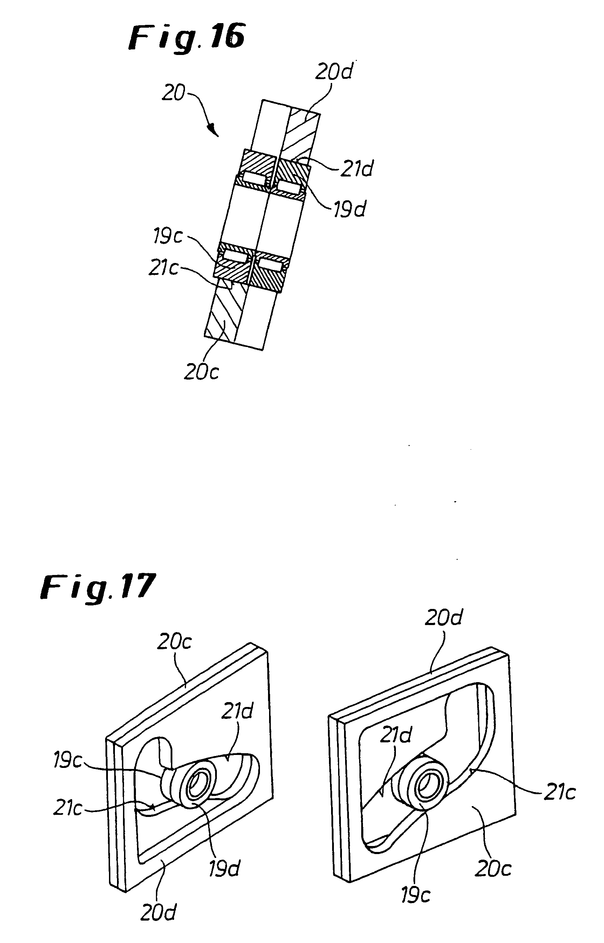

Derselbe, äußert wirksame Effekt lässt sich erreichen, wenn auf dem bzw. den Achsbolzen 18 koaxial nebeneinander zwei Laufrollen 19 c, 19 d gelagert sind, wie in den Fig. 14 bis 17 dargestellt, denen in der Kulissenführung 21 zueinander höhenversetzte, benachbarte Laufbahnen 21 c, 21 d zugeordnet sind, die somit für jede Laufrolle 19 c bzw. 19 d eine gesonderte Kulissenführung bereitstellen. Die Kulissenführungen bzw. Laufbahnen 21 c und 21 d sind hierbei in separaten, paarweise zusammengesetzten Kulissenscheiben 20 c und 20 d ausgebildet.

### Bezugszeichenliste:

- 1: Formstation
- 2: Folienbahn
- 3: Fang-/Stapelplatte
- 4: Querhaupt
- 5: Oberwerkzeug
- 6: Unterwerkzeug
- 7: Formtisch
- 8 a, 8 b: Linearführung
- 9: Schwenkrahmen
- 10: Bewegliches Teil der Linearführung
- 11: Führungsschiene der Linearführung
- 12: Schwenkwelle
- 13: Schubkurbelantrieb
- 14: Servomotor bzw. Servo-Getriebemotor / Antrieb
- 15 a, 15 b: Pleuelstange
- 16: Unterer Kniehebel
- 17: Oberer Kniehebel
- 18: Achsbolzen
- 18 a: Exzenterabschnitt
- 19: Laufrolle
- 19 a, 19 b: Laufrolle auf Exzenterabschnitt
- 19 c, 19 d: koaxial angeordnete Laufrollen
- 20; 20 c, 20 d: Kulissenscheiben
- 21: Kulissenführung
- 21 a: Untere Laufbahn der Kulissenführung
- 21 b: Obere Laufbahn der Kulissenführung
- 21 c, 21 d: Höhenversetzte Laufbahnen der Kulissenführung

## Patentansprüche

1. Vorrichtung zum Herstellen von Hohlkörpern aus thermoplastisch verformbaren Kunststoff-Folien, umfassend einen intermittierenden Folientransport, ein oberhalb der Folienbahn (2) angeordnetes Oberwerkzeug (5) und einen unterhalb der Folienbahn in einem Schwenkrahmen (9) höhenverschiebbar geführten, mit dem Schwenkrahmen (9) ausschwenkbaren Formtisch (7) zur Aufnahme eines Unterwerkzeugs (6), insbesondere kombiniertes Form-und Stanzwerkzeug, wobei der Formtisch (7) über einen kurvengesteuerte Kniehebel aufweisenden Schubkurbelantrieb (13) an einen Antrieb (14) angeschlossen ist,
**dadurch gekennzeichnet,**
**dass** eine Pleuelstange (15 a, 15 b) des Schubkurbelantriebs (13) an einer mit dem Drehpunkt des Schwenkrahmens (9) identischen Schwenkwelle (12) angreift, auf der ein unterer Kniehebel (16) befestigt ist, der außerdem gelenkig mit einem oberen, an seinem von dem unteren Kniehebel (16) entfernten, freien Ende am Formtisch (7) angreifenden Kniehebel (17) verbunden ist, dem auf beiden Seiten eines am Formtisch (7) vorgesehenen Achsbolzens (18; 18 a) jeweils mindestens eine Laufrolle (19; 19 a, 19 b; 19 c, 19 d) zugeordnet ist, die in ortsfeste, vom Schwenkrahmen (9) und vom Formtisch (7) unabhängige, die lineare Hubbewegung und die Schwenkbewegung des Schwenkrahmens (9) samt Formtisch (7) steuernden Kulissen (20, 21; 20 c, 20 d, 21 a, 21 b, 21 c, 21 d) eingreifen.

2. Vorrichtung nach Anspruch 1,
**dadurch gekennzeichnet,**
**dass** gleichzeitig der obere Kniehebel (17) mit seinem freien Ende auf dem oder den die Laufrollen (19; 19 a, 19 b; 19 c, 19 d) tragenden Achsbolzen (18; 18 a) gelagert ist.

3. Vorrichtung nach Anspruch 1 oder 2,
**dadurch gekennzeichnet,**
**dass** der Schubkurbelantrieb (13) zwei parallel voneinander beabstandete Pleuelstangen (15 a, 15 b) aufweist, die mit ihnen jeweils zugeordneten Kniehebeln (16, 17) mit dem kulissengesteuerten Formtisch (7) verbunden sind.

4. Vorrichtung nach einem der Ansprüche 1 bis 3,
**gekennzeichnet durch**
einen die Pleuelstangen (15 a, 15 b) antreibenden Servomotor (14).

5. Vorrichtung nach einem der Ansprüche 1 bis 4,
**dadurch gekennzeichnet,**
**dass** der Formtisch (7) beidseitig angeordnete Linearführungen (8 a, 8 b) aufweist, deren bewegliche Teile (10) am Formtisch (7) und deren Führungsschienen (11) am Schwenkrahmen (9) vorgesehen sind.

6. Vorrichtung nach einem der Ansprüche 1 bis 5,
**dadurch gekennzeichnet,**
**dass** die den oder die beiden oberen Kniehebel (17) am Formtisch (7) lagernden Achsbolzen (18 a) exzentrisch ausgebildet sind und auf einem Exzenterabschnitt eine auf der unteren Laufbahn (21 a) der Kulisse (20, 21) und auf einem anderen Exzenterabschnitt eine auf der oberen Laufbahn (21 b) der Kulisse (20, 21) abrollende Laufrolle (19 a, 19 b) angeordnet ist.

7. Vorrichtung nach einem der Ansprüche 1 bis 5,
**dadurch gekennzeichnet,**
**dass** die den oder die beiden oberen Kniehebel (17) am Formtisch (7) lagernden Achsbolzen (18) zylindrisch sind und koaxial nebeneinander zwei Laufrollen (19 c, 19 d) tragen, die auf zueinander höhenversetzten, benachbarten Laufbahnen (21 c, 21 d) der Kulisse (20, 21; 21 a, 21 b) abrollen.

8. Vorrichtung nach Anspruch 7,
**dadurch gekennzeichnet,**
**dass** jede Laufbahn (21 c, 21 d) in einer separaten Kulissenscheibe (20 c, 20 d) ausgebildet ist.

## Claims

1. A device for manufacturing hollow bodies of thermoplastically deformable plastic films, comprising an intermittent film transport, an upper die (5) that is arranged above the film strip (2) and a moulding table (7) for accommodating a lower die (6), wherein said moulding table is guided in a vertically displaceable fashion underneath the film strip in a pivoting frame (9) and can be pivoted together with the pivoting frame (9), particularly a combined moulding and punching tool, wherein the moulding table (7) is connected to a drive (14) by means of a slider-crank mechanism (13) that features cam-controlled toggle levers,
**characterized in**
**that** a connecting rod (15a, 15b) of the slider-crank mechanism (13) engages on a pivoting shaft (12) that is identical to the center of motion of the pivoting frame (9) and on which a lower toggle lever (16) is mounted that is also connected in an articulated fashion to an upper toggle lever (17) that engages on the moulding table (7) with its free end that is situated distant from the lower toggle lever (16), wherein at least one roller (19; 19a, 19b; 19c, 19d) is assigned to the upper toggle lever on both sides of an axle bolt (18; 18a) provided on the moulding table (7), and wherein said rollers engage into stationary links (20, 21; 20c, 20d, 21a, 21b, 21c, 21d) that are realized independently of the pivoting frame (9) and the moulding table (7) and control the linear lifting motion and the pivoting motion of the pivoting frame (9) including the moulding table (7).

2. The device according to Claim 1,
**characterized in**
**that** the upper toggle lever (17) is simultaneously supported on the axle bolt (18; 18a) that carries the roller or the rollers (19; 19a, 19b; 19c, 19d) with its free end.

3. The device according to Claim 1 or 2,
**characterized in**
**that** the slider-crank mechanism (13) features two parallel connecting rods (15a, 15b) that are spaced apart from one another and connected to the link-controlled moulding table (7) with their respectively assigned toggle levers (16, 17).

4. The device according to one of Claims 1 to 3,
**characterized by**
a servo motor (14) that drives the connecting rods (15a, 15b).

5. The device according to one of Claims 1 to 4,
**characterized in**
**that** the moulding table (7) features linear guides (8a, 8b) that are arranged on both sides, wherein the movable parts (10) of the linear guides are provided on the moulding table (7) and their guide rails (11) are provided on the pivoting frame (9).

6. The device according to one of Claims 1 to 5,
**characterized in**
**that** the axle bolts (18a) that support the or both upper toggle lever(s) (17) on the moulding table (7) are realized eccentrically, and in that a roller (19a, 19b) that rolls on the lower slideway (21a) of the link (20, 21) is arranged on one eccentric section and a roller that rolls on the upper slideway (21b) of the link (20, 21) is arranged on another eccentric section.

7. The device according to one of Claims 1 to 5,
**characterized in**
**that** the axle bolts (18) that support the or both upper toggle lever(s) (17) on the moulding table (7) are realized cylindrically and carry two rollers (19c, 19d) coaxially adjacent to one another, wherein said rollers roll on adjacent slideways (21c, 21d) of the link (20, 21; 21a, 21b) that are vertically offset relative to one another.

8. The device according to Claim 7,
**characterized in**
**that** each slideway (21c, 21d) is realized in a separate link plate (20c, 20d).

## Revendications

1. Dispositif de fabrication de corps creux à partir de films en matière thermoplastique déformable, comprenant un transport intermittent du film, un outil supérieur (5) disposé au-dessus de la bande de film (2) et une table de formage (7) guidée en étant déplaçable en hauteur dans un cadre pivotant (9) en-dessous de la bande de film, susceptible de pivoter avec le cadre pivotant (9) pour la réception d'un outil inférieur (6), notamment un outil mixte de formage et de découpe, la table de formage (7) étant raccordée à un entraînement (14) par l'intermédiaire d'un mécanisme bielle-manivelle (13) comportant un levier à genouillère commandé par came,
**caractérisé en ce qu'**
une bielle motrice (15a, 15b) du mécanisme bielle-manivelle (13) s'engage sur arbre de pivotement (12) identique au point de rotation du cadre pivotant (9) sur lequel est fixé un levier à genouillère inférieur (16) lequel est relié par ailleurs de façon articulée avec un levier à genouillère supérieur (17) s'engageant par son extrémité libre éloignée du levier à genouillère inférieur (16) sur la table de formage (7), auquel est associé sur chacun des deux côtés d'un boulon-pivot (18 ; 18a) prévu sur la table de formage (7) au moins un galet de roulement (19 ; 19a, 19b ; 19c, 19d) qui s'engagent dans des coulisses (20, 21 ; 20c, 20d, 21a, 21b, 21c, 21d) stationnaires, indépendantes du cadre pivotant (9) et de la table de formage (7), commandant la course linéaire et le déplacement en pivotement du cadre pivotant (9) avec la table de formage (7).

2. Dispositif selon la revendication 1,
**caractérisé en ce que**
simultanément, le levier à genouillère supérieur (17) est logé par son extrémité libre sur le ou les boulon(s)-pivot(s) (18 ; 18a) portant les galets de roulement (19 ; 19a, 19b ; 19c, 19d).

3. Dispositif selon la revendication 1 ou 2,
**caractérisé en ce que**
le mécanisme bielle-manivelle (13) comporte deux bielles motrices (15a, 15b) écartées l'une de l'autre à la parallèle, qui sont reliées par des leviers à genouillère (16, 17) qui leur sont respectivement associés avec la table de formage (7) commandée par coulisses.

4. Dispositif selon l'une quelconque des revendications 1 à 3,
**caractérisé par**
un servomoteur (14) entraînant les bielles motrices (15a, 15b).

5. Dispositif selon l'une quelconque des revendications 1 à 4,
**caractérisé en ce que**
la table de formage (7) comporte des guidages linéaires (8a, 8b) disposés de part et d'autre, dont les éléments mobiles (10) sur la table de formage (7) et sur ses glissières (11) sont prévus sur le cadre pivotant (9).

6. Dispositif selon l'une quelconque des revendications 1 à 5,
**caractérisé en ce que**
les boulons-pivots (18a) sur lesquels le ou les deux leviers à genouillère (17) supérieurs est ou sont logé(s) sur la table de formage (7) sont conçus sous forme excentrique et **en ce que** sur une partie excentrique est disposé un galet de roulement (19a) roulant sur la voie de roulement inférieure (21a) de la coulisse (20, 21) et sur une autre partie excentrique un galet de roulement (19b) roulant sur la voie de roulement supérieure (21 b) de la coulisse (20, 21).

7. Dispositif selon l'une quelconque des revendications 1 à 5,
**caractérisé en ce que**
les boulons-pivots (18) sur lequel le ou les deux leviers à genouillère (17) supérieurs est ou sont logé(s) sur la table de formage (7) sont cylindriques et portent de façon coaxiale l'un par rapport à l'autre deux galets de roulement (19c, 19d) qui roulent sur des voie de roulements (21c, 21d) voisines, décalées en hauteur l'une par rapport à l'autre de la coulisse (20, 21 ; 21a, 21b).

8. Dispositif selon la revendication 7,
**caractérisé en ce que**
chaque voie de roulement (21c, 21d) est conçue dans un disque à coulisse (20c, 20d) séparé.
